# EUROPEAN PATENT SPECIFICATION

(11) **EP 2 681 423 B1**
(45) Date of publication and mention of the grant of the patent: **25.11.2015**
(21) Application number: 12752564.0
(22) Date of filing: 27.02.2012
(51) Int. Cl.: F01N 11/00, F01N 3/025, F01N 3/20, F01N 3/035, F01N 3/10

(54) **METHOD FOR FAULT DETECTION IN AN EXHAUST SYSTEM**
VERFAHREN ZUR FEHLERERKENNUNG IN EINEM ABGASSYSTEM
PROCÉDÉ DE DÉTECTION DE DÉFAUTS DANS UN SYSTÈME D'ÉCHAPPEMENT

(30) Priority: 02.03.2011 SE 1150186
(43) Date of publication of application: 08.01.2014
(73) Proprietor: Scania CV AB, 151 87 Södertälje (SE)
(72) Inventor: STENLÅÅS, Ola, S-151 48 Södertälje (SE)
(74) Representative: Scania CV AB
(86) International application number: PCT/SE2012/050213
(87) International publication number: WO 2012/118429

(56) References cited:
- WO-A1-99/35388
- DE-A1-102009 000 457
- US-A- 5 385 134
- US-A1- 2008 022 658
- US-A1- 2011 083 424

## Description

### FIELD OF THE INVENTION AND PRIOR ART

The present invention relates to a method for fault detection in an exhaust system which comprises
- an exhaust line intended to receive exhaust gases from a combustion engine,
- a fuel oxidation device situated in the exhaust line,
- a fuel injection device for injection of fuel into the exhaust line at an injection point situated upstream of the fuel oxidation device, which injection device is caused, e.g. at the time of regeneration of a particle filter situated downstream of the fuel oxidation device, to inject fuel into the exhaust gases with a mass flow so regulated that the fuel injected generates a desired increase in the temperature of the exhaust gases during their passage through the fuel oxidation device,
- an SCR catalyst situated in the exhaust line, and
- a reducing agent injection device for injection of reducing agent into the exhaust line at an injection point situated upstream of the SCR catalyst, which injection device is caused to inject reducing agent into the exhaust gases with a mass flow so regulated that the reducing agent injected generates a desired conversion of NOₓ in the exhaust gases during their passage through the SCR catalyst.

The invention relates also to a computer programme and a computer programme product comprising computer programme code for implementing a method according to the invention, and to an electronic control unit.

To meet prevailing exhaust cleaning requirements, today's motor vehicles are often provided with a catalyst in the exhaust line to effect catalytic conversion of environmentally hazardous constituents of the exhaust gases to environmentally less hazardous substances. A method which has been employed for achieving effective catalytic conversion is based on injection of a reducing agent into the exhaust gases upstream of the catalyst. A reducing substance which forms part of, or is formed by, the reducing agent is carried by the exhaust gases into the catalyst and is adsorbed on active seats therein, resulting in accumulation of the reducing substance in the catalyst. The accumulated reducing substance may either be desorbed, i.e. become detached from the active seats, or react with an exhaust substance and thereby convert the latter to a substance with less environmental impact. Such a reduction catalyst may for example be of the SCR (selective catalytic reduction) type. This type of catalyst is hereinafter called an SCR catalyst. An SCR catalyst reduces NOₓ in the exhaust gases. In the case of an SCR catalyst a reducing agent in the form of urea is usually injected into the exhaust gases upstream of the catalyst. The injection of urea into the exhaust gases results in the formation of ammonia which then serves as the reducing substance to assist the catalytic conversion in the SCR catalyst. The ammonia accumulates in the SCR catalyst by being adsorbed on active seats therein, and NOₓ present in the exhaust gases is converted to nitrogen and water when it is brought into contact in the catalyst with ammonia accumulated on the catalyst's active seats.

When an SCR catalyst is used in combination with dosing of reducing agent, it is important to control the injection of the reducing agent so that desired conversion of the respective exhaust substance is achieved without too large amounts of unconsumed reducing substance leaving the catalyst along with the exhaust gases and thereby being released to the surroundings or having to be dealt with in a slip catalyst. The consumption and hence the cost of the reducing agent may thereby be minimised while at the same time avoiding or at least minimising any unintended release of the reducing substance to the surroundings. Ammonia for example is a toxic and malodorous reducing substance, so it is desirable as far as possible to minimise its release to the surroundings while maintaining sufficient injection of reducing agent, e.g. in the form of urea, to achieve required NOₓ conversion.

The injection of reducing agent into the exhaust line upstream of an SCR catalyst is usually regulated by means of a regulating valve in response to control signals from an electronic control device. The amount of reducing agent injected into the exhaust line, i.e. the dosage of the reducing agent, is regulated to achieve a desired conversion of NOₓ in the exhaust gases during their passage through the SCR catalyst.

A particle filter is often also provided in the exhaust line upstream or downstream of the SCR catalyst. An oxidation catalyst may be situated in the exhaust line upstream of the particle filter. When the particle filter needs to be regenerated, i.e. to be freed of particles deposited in it, fuel is injected into the exhaust gases upstream of the oxidation catalyst. This fuel accompanies the exhaust gases into the oxidation catalyst and is oxidised therein, generating such an increase in the temperature of the exhaust gases that combustion of the particles deposited in the filter takes place, thereby regenerating the filter.

The injection of fuel into the exhaust line upstream of an oxidation catalyst is regulated, for example, by means of a regulating valve in response to control signals from an electronic control device. The amount of fuel injected into the exhaust line, i.e. the dosage of the fuel, is regulated so as to achieve a desired increase in the temperature of the exhaust gases during their passage through the oxidation catalyst.

To ensure that a reducing agent injection device and a fuel injection device in an exhaust system function as intended and inject correct amounts of reducing agent and fuel respectively, their function is monitored in various ways. When a malfunction is detected, however, it may in certain cases be difficult to establish whether it is caused by a fault in any of the injection devices or by something else, which means that locating and rectifying the problem may be a complicated and time-consuming operation.

A monitoring system for an exhaust after treatment system is known from US 2008/0022658.

### OBJECT OF THE INVENTION

The object of the present invention is to propose a novel and advantageous way of detecting a malfunction in an exhaust system of the type indicated in the introduction.

### SUMMARY OF THE INVENTION

According to the present invention, said object is achieved by a method having the features defined in claim 1. This method is characterised by
- determining an exhaust mass flow value which represents the mass flow of the exhaust gases released from the combustion engine,
- comparing the mass flow of the fuel injected by the fuel injection device, herein called the actual fuel mass flow, with an expected fuel mass flow which corresponds to that which, taking the exhaust mass flow value into account, is expected to be injected by the fuel injection device in order to generate the desired temperature increase; or comparing the desired temperature increase generated with an expected temperature increase which corresponds to that which, taking the exhaust mass flow value into account, is expected to be generated with the prevailing mass flow of the fuel injected by the fuel injection device,
- comparing the mass flow of the reducing agent injected by the reducing agent injection device, herein called the actual reducing agent mass flow, with an expected reducing agent mass flow which corresponds to that which, taking the exhaust mass flow value into account, is expected to be injected by the reducing agent injection device in order to generate the desired NOₓ conversion; or comparing the desired NOₓ conversion generated with an expected NOₓ conversion which corresponds to that which, taking the exhaust mass flow value into account, is expected to be generated with the prevailing mass flow of the reducing agent injected by the reducing agent injection device, and

- finding that there is in the exhaust system an exhaust mass flow error due to exhaust leakage in the exhaust line upstream of said injection points or to incorrectly determined exhaust mass flow value if said comparisons show that the following conditions are fulfilled:
   a) if the actual fuel mass flow is smaller than the expected fuel mass flow, or the temperature increase generated is greater than the expected temperature increase, and
   b) if the actual reducing agent mass flow is smaller than the expected reducing agent mass flow, or the NOₓ conversion generated is greater than the expected NOₓ conversion.

The method according to the invention is based on the insight that an exhaust mass flow error due to exhaust leakage in the exhaust line upstream of the fuel and reducing agent injection points or to consistently incorrect measurement or calculation of the mass flow of the exhaust gases released from the combustion engine results in similarly incorrect behaviour of the SCR catalyst and the fuel oxidation device. Exhaust leakage upstream of the fuel and reducing agent injection points means that the exhaust mass flow through the SCR catalyst and the fuel oxidation device will be smaller than the exhaust mass flow from the engine determined by means of a mass flowmeter or by calculation. A similar incorrect state occurs if said mass flowmeter or calculation provides an incorrect exhaust mass flow value which is constantly greater than the actual exhaust mass flow from the engine. When the actual exhaust mass flow through the SCR catalyst is thus smaller than that which corresponds to the exhaust mass flow value determined, a smaller amount of NOₓ than expected will reach the SCR catalyst per unit time, resulting in a smaller amount of reducing agent than expected being consumed per unit time to achieve a given NOₓ conversion in the SCR catalyst. At the same time, the NOₓ conversion generated by means of a certain amount of reducing agent injected per unit time at a certain exhaust mass flow determined from the engine will in this case be greater than expected.

When the actual exhaust mass flow through the fuel oxidation device in the case mentioned above is smaller than the exhaust mass flow which corresponds to the exhaust mass flow value determined, a smaller amount of exhaust gases than expected will reach the fuel oxidation device per unit time, resulting in a smaller amount of fuel than expected being consumed per unit time to achieve a given increase in the temperature of the exhaust gases during their passage through the fuel oxidation device. At the same time, the temperature increase generated by means of a certain amount of fuel injected per unit time at a certain exhaust mass flow determined from the engine will in this case be greater than expected.

An actual exhaust mass flow through both the fuel oxidation device and the SCR catalyst which is smaller than that which corresponds to the exhaust mass flow value determined constitutes an exhaust mass flow error due either to exhaust leakage in the exhaust line upstream of the fuel oxidation device and the SCR catalyst or to incorrectly determined exhaust mass flow value, and such an error will result in the aforesaid conditions a) and b) being simultaneously fulfilled. Purely theoretically, simultaneous malfunction of the fuel injection device and the reducing agent injection device might also result in conditions a) and b) being simultaneously fulfilled, but the likelihood of this is so slight that it may in practice be disregarded as a plausible cause of error.

Other advantageous features of the method according to the invention are indicated by the dependent claims and the description set out below.

The invention relates also to a computer programme having the features defined in claim 4, a computer programme product having the features defined in claim 5 and an electronic control unit having the features defined in claim 6.

### BRIEF DESCRIPTION OF THE DRAWINGS

The invention is described below in more detail on the basis of embodiment examples with reference to the attached drawings, in which
- Fig. 1: is a schematic diagram of a combustion engine with associated exhaust system,
- Fig 2: is a schematic diagram of an electronic control unit for implementing a method according to the invention,
- Fig. 3: is a flowchart illustrating a method according to a first embodiment of the invention, and
- Fig. 4: is a flowchart illustrating a method according to a second embodiment of the invention.

### DETAILED DESCRIPTION OF EMBODIMENTS OF THE INVENTION

The invention is described below as applied to a motor vehicle. The invention is however not restricted to that application but may be employed in all contexts where an SCR catalyst with associated reducing agent injection device and a fuel oxidation device with associated fuel injection device form part of an exhaust system for a combustion engine.

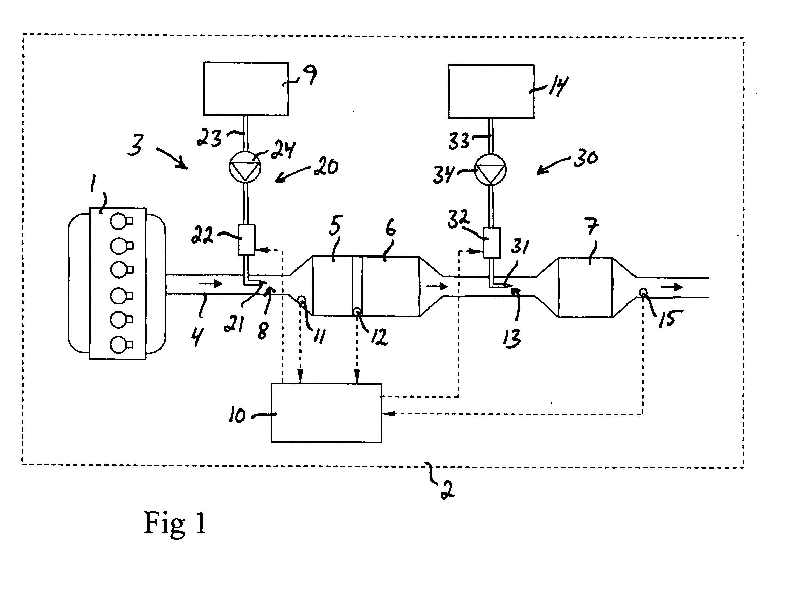

Fig. 1 depicts schematically a combustion engine 1 of a motor vehicle 2. The exhaust gases leaving the engine are received by an exhaust system 3 which comprises an exhaust line 4 intended to receive the exhaust gases generated by the engine. The exhaust gases from the engine flow through the exhaust line 4 and emerge into the surroundings via an exhaust outlet at the downstream end of the exhaust line. In the exhaust line 4, a fuel oxidation device 5 and a particle filter 6 are arranged in series with one another, the particle filter being situated downstream of the fuel oxidation device. In the exhaust line 4 an SCR catalyst 7 is also arranged in series with the fuel oxidation device 5. In the example illustrated, the SCR catalyst 7 is situated downstream of the fuel oxidation device 5 and the particle filter 6 but might alternatively be situated upstream of them.

In the embodiment depicted in Fig. 1 and described below, the fuel oxidation device 5 takes the form of an oxidation catalyst. It might alternatively take the form of a set of two or more oxidation catalysts connected in series and/or in parallel or be composed of one or more fuel oxidising units of some other type.

An injection point 8 for fuel is provided in the exhaust line 4 upstream of the oxidation catalyst 5. The injection of fuel into the exhaust line 4 is by means of an injection device 20 comprising one or more injection means 21 situated in the exhaust line in the form of injection nozzles or the like. A fuel tank 9 is connected to said injection means 21. Fuel supply to said injection means 21 is regulated by means of a regulating valve 22 situated between the fuel tank 9 and said injection means 21. The regulating valve 22 is controlled by an electronic control device 10 which determines how much fuel is at the time to be injected into the exhaust gases. The control device 10 uses the regulating valve 22 to regulate the amount of fuel injected into the exhaust gases. In a feed line 23 between the fuel tank 9 and the regulating valve 22 a pump 24 is provided to feed fuel from the fuel tank to the regulating valve so as to maintain a given pressure of the fuel fed to the regulating valve.

When the particle filter 6 needs to be regenerated, i.e. to be freed of particles deposited in it, fuel is injected into the exhaust gases by means of the fuel injection device 20. This fuel accompanies the exhaust gases into the oxidation catalyst 5 and is oxidised therein, generating such an increase in the temperature of the exhaust gases that combustion of the particles deposited in the particle filter 6 takes place, thereby regenerating the filter. The control device 10 is arranged in a conventional way to regulate the mass flow of the fuel injected via the injection device 20 so that this fuel injected generates a desired increase in the temperature of the exhaust gases during their passage through the oxidation catalyst 5. The temperature increase generated by a certain amount of fuel injected depends inter alia on the mass flow of the exhaust gases which pass the injection point 8 before flowing into the oxidation catalyst 5.

In the example illustrated in Fig. 1, a first temperature sensor 11 is provided to measure the temperature of the exhaust gases upstream of the oxidation catalyst 5, and a second temperature sensor 12 to measure the temperature of the exhaust gases downstream of the oxidation catalyst 5. The control device 10 is connected to these temperature sensors 11, 12 in order to receive from them measured values for the prevailing exhaust temperature at the respective measuring points. The control device 10 can use the measured values from the temperature sensors 11, 12 as a basis for determining the temperature increase ΔT which the fuel accompanying the exhaust gases into and oxidising in the oxidation catalyst 5 imparts to the exhaust gases during their passage through the oxidation catalyst 5. As the control device 10 is intended to control the fuel injection so that the fuel injected generates a desired increase in the temperature of the exhaust gases, the temperature increase ΔT generated will correspond to this desired temperature increase.

An injection point 13 for reducing agent is situated in the exhaust line 4 upstream of the SCR catalyst 7. The injection of reducing agent into the exhaust line 4 is by means of an injection device 30 comprising one or more injection means 31 situated in the exhaust line in the form of injection nozzles or the like. A storage container 14 for reducing agent is connected to said injection means 31. The supply of reducing agent to said injection means 31 is regulated by means of a regulating valve 32 situated between the storage container 14 and said injection means 31. The regulating valve 32 is controlled by the electronic control device 10 which determines how much reducing agent is at the time to be injected into the exhaust gases. The control device 10 uses the regulating valve 32 to regulate the amount of reducing agent injected into the exhaust gases. In a feed line 33 between the storage container 14 and the regulating valve 32 a pump 34 is provided to feed reducing agent from the storage container to the regulating valve so as to maintain a given pressure of the reducing agent fed to the regulating valve.

The control device 10 is arranged in a conventional way to regulate the mass flow of the reducing agent injected via the injection device 30 so that the reducing agent injected generates a desired conversion of NOₓ in the exhaust gases during their passage through the SCR catalyst 7. The NOₓ conversion generated by a certain amount of reducing agent injected depends inter alia on the mass flow of the exhaust gases which pass the injection point 13 before flowing into the SCR catalyst 7.

An NOₓ sensor 15 is provided in the exhaust line 4 downstream of the SCR catalyst 7 to measure the NOₓ concentration in the exhaust gases downstream of the SCR catalyst. The control device 10 is connected to this NOₓ sensor 15 in order to receive from it measured values for the prevailing NOₓ concentration in the exhaust gases downstream of the SCR catalyst. The control device 10 can use measured values from the NOₓ sensor 15 as a basis for determining the NOₓ conversion ΔNOₓ which the reducing agent injected into the exhaust gases causes in them during their passage through the SCR catalyst 7. As the control device 10 is intended to control the reducing agent injection so that the reducing agent injected generates a desired NOₓ conversion, the NOₓ conversion generated ΔNOₓ will correspond to this desired NOₓ conversion.

The NOₓ concentration in the exhaust gases upstream of the SCR catalyst 7 may be determined by means of an NOₓ sensor in the exhaust line upstream of the SCR catalyst but might also be determined in any of the conventional ways for calculating it, e.g. on the basis of engine load, engine speed, injection angle and, where applicable, EGR (exhaust gas recirculation) content.

The control device 10 is arranged to determine or receive an exhaust mass flow value Vₑₓₕ which represents the mass flow of the exhaust gases released from the engine to the exhaust line 4. This exhaust mass flow value Vₑₓₕ may be determined by means of a mass flowmeter situated in the exhaust line 4 but might also be determined in any of the conventional ways for calculating it, e.g. on the basis of engine load and engine speed.

As the injection of fuel via the fuel injection device 20 and the injection of reducing agent via the reducing agent injection device 30 take place with mass flows determined by the control device 10, this control device has access to information about the mass flow of the fuel injected by the injection device 20, herein called the actual fuel mass flow, and the mass flow of the reducing agent injected by the injection device 30, herein called the actual reducing agent mass flow.

To evaluate the effect generated by the fuel injected by the injection device 20, the control device 10 is arranged to
- compare the actual fuel mass flow with an expected fuel mass flow which corresponds to that which, taking the exhaust mass flow value Vₑₓₕ into account, is expected to be injected by the injection device 20 in order to generate the desired temperature increase ΔT, or
- compare the temperature increase generated ΔT with an expected temperature increase which corresponds to that which, taking the exhaust mass flow value Vₑₓₕ into account, is expected to be generated with the prevailing mass flow of the fuel injected by the injection device 20.

The aforesaid expected fuel mass flow is determined in the control device 10 by means of a calculation model of conventional type on the basis inter alia of the exhaust mass flow value Vₑₓₕ and the temperature increase ΔT, and the aforesaid expected temperature increase is determined in the control device 10 by means of a calculation model of conventional type on the basis inter alia of the exhaust mass flow value Vₑₓₕ and the mass flow of the fuel injected by the injection device 20.

To evaluate the effect generated by the reducing agent injected by the injection device 30, the control device 10 is arranged to
- compare the actual reducing agent mass flow with an expected reducing agent mass flow which corresponds to that which is expected, taking the exhaust mass flow value Vₑₓₕ into account, to be injected by the injection device 30 in order to generate the desired NOₓ conversion ΔNOₓ, or
- compare the NOₓ conversion generated ΔNOₓ with an expected NOₓ conversion which corresponds to that which is expected, taking the exhaust mass flow value Vₑₓₕ into account, to be generated with the prevailing mass flow of the reducing agent injected by the injection device 30.

The aforesaid expected reducing agent mass flow is determined in the control device 10 by means of a calculation model of conventional type on the basis inter alia of the exhaust mass flow value Vₑₓₕ and the NOₓ conversion ΔNOₓ, and the aforesaid expected NOₓ conversion is determined in the control device 10 by means of a calculation model of conventional type on the basis inter alia of the exhaust mass flow value Vₑₓₕ and the mass flow of the reducing agent injected by the injection device 30.

The control device 10 is arranged to find that there is in the exhaust system 3 an exhaust mass flow error due to exhaust leakage in the exhaust line 4 upstream of said injection points 8, 13 or to incorrectly determined exhaust mass flow value Vₑₓₕ if the aforesaid comparisons show that conditions a) and b) set out below are fulfilled:
a) if the actual fuel mass flow is smaller than the expected fuel mass flow, or the temperature increase generated ΔT is greater than the expected temperature increase, and
b) if the actual reducing agent mass flow is smaller than the expected reducing agent mass flow, or the NOₓ conversion generated ΔNOₓ is greater than the expected NOₓ conversion.

When there is found to be an exhaust mass flow error, action may be taken to correct the exhaust mass flow value so that the exhaust mass flow value Vₑₓₕ determined or received by the control device is caused to correspond better to the actual exhaust mass flow through the oxidation catalyst 5 and the SCR catalyst 7. The actual exhaust mass flow through the oxidation catalyst 5 and the SCR catalyst 7 may for example be estimated by means of a calculation model on the basis of relationships well known to one skilled in the art between the aforesaid actual fuel mass flow and the temperature increase generated ΔT or on the basis of relationships well known to one skilled in the art between the aforesaid actual reducing agent mass flow and the NOₓ conversion generated ΔNOₓ. Supplementary investigations may also be done to locate and rectify any leaks in the exhaust line upstream of said injection points 8, 13.

The control device 10 may comprise a single electronic control unit as in Fig. 1 or two or more mutually cooperating electronic control units.

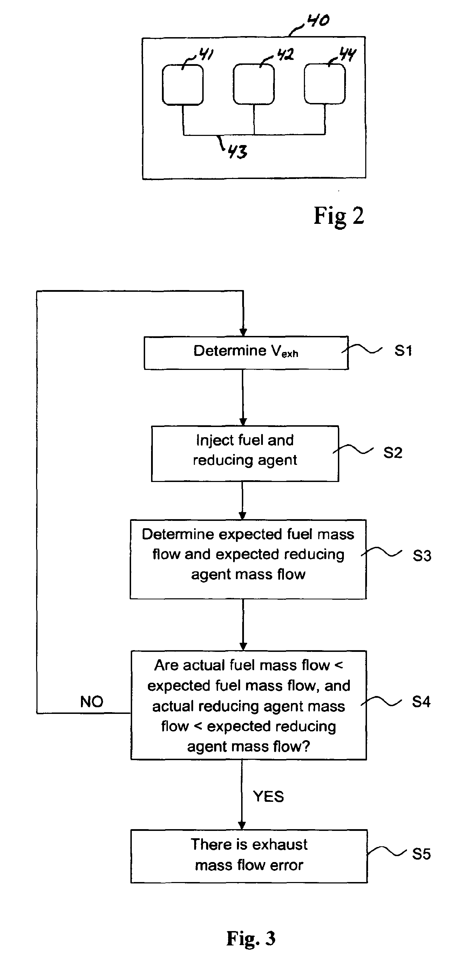

Fig. 3 is a flowchart illustrating an embodiment of a method according to a first embodiment of the present invention for fault detection in an exhaust system 3 of the type indicated above.
As a first step S1, an exhaust mass flow value Vₑₓₕ is determined which represents the mass flow of the exhaust gases released from the engine to the exhaust line 4.

As a second step S2, fuel is injected into the exhaust line 4 by means of the fuel injection device 20, and reducing agent by means of the reducing agent injection device 30, the fuel injection mass flow being regulated so that the fuel injected generates a desired temperature increase ΔT in the exhaust gases during their passage through the fuel oxidation device 5, and the reducing agent injection mass flow being regulated so that the reducing agent injected generates a desired NOₓ conversion ΔNOₓ in the exhaust gases during their passage through the SCR catalyst 7.
As a third step S3, calculation models are used to determine
- an expected fuel mass flow which corresponds to that which is expected, taking the exhaust mass flow value Vₑₓₕ into account, to be injected by the injection device 20 in order to generate the desired temperature increase ΔT, and
- an expected reducing agent mass flow which corresponds to that which is expected, taking the exhaust mass flow value Vₑₓₕ into account, to be injected by the injection device 30 in order to generate the desired NOₓ conversion ΔNOₓ.
As a fourth step S4, the actual fuel mass flow injected by the injection device 20 is compared with said expected fuel mass flow, and the actual reducing agent mass flow injected by the injection device 30 is compared with said expected reducing agent mass flow.

If the comparisons at step S4 show that the actual fuel mass flow is smaller than the expected fuel mass flow and that the actual reducing agent mass flow is smaller than the expected reducing agent mass flow, it is then found as a fifth step S5 that there is in the exhaust system 3 an exhaust mass flow error due to exhaust leakage in the exhaust line 4 upstream of the aforesaid injection points 8, 13 or to incorrectly determined exhaust mass flow value Vₑₓₕ. If the comparisons at step S4 show that such is not the case, steps S1-S4 are repeated at a later time.

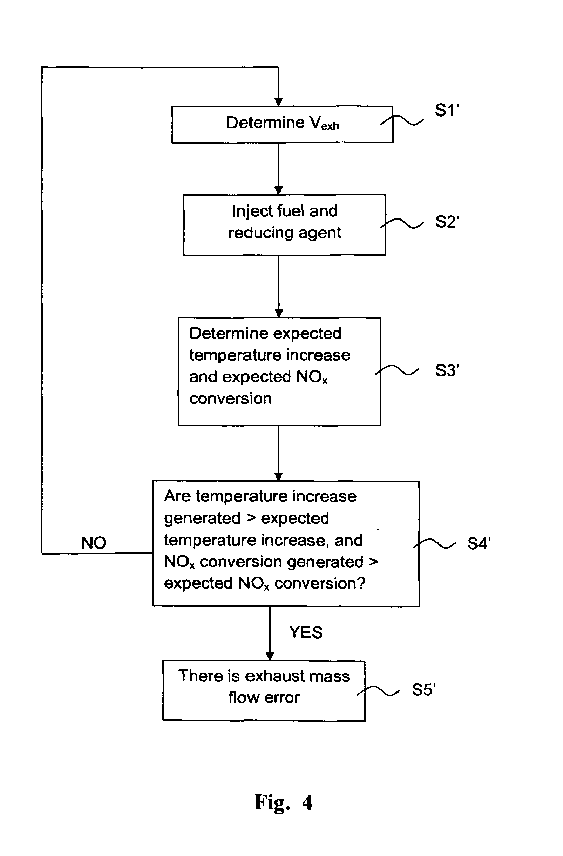

Fig. 4 is a flowchart illustrating an embodiment of a method according to a second embodiment of the present invention for fault detection in an exhaust system 3 of the type indicated above.
The first and second steps S1' and S2' of the method illustrated in Fig. 4 correspond to steps S1 and S2 indicated above of the method illustrated in Fig. 3.
As a third step S3' calculation models are used to determine
- an expected temperature increase which corresponds to that which is expected, taking the exhaust mass flow value Vₑₓₕ into account, to be generated with the prevailing mass flow of the fuel injected by the injection device 20, and
- an expected NOₓ conversion which corresponds to that which is expected, taking the exhaust mass flow value Vₑₓₕ into account, to be generated with the prevailing mass flow of the reducing agent injected by the injection device 30.
As a fourth step S4', the temperature increase generated ΔT is compared with said expected temperature increase, and the NOₓ conversion generated ΔNOₓ is compared with said expected NOₓ conversion.
If the comparisons at step S4' show that the temperature increase generated ΔT is greater than the expected temperature increase and that the NOₓ conversion generated ΔNOₓ is greater than the expected NOₓ conversion, it is then found as a fifth step S5' that there is in the exhaust system 3 an exhaust mass flow error due to exhaust leakage in the exhaust line 4 upstream of the aforesaid injection points 8, 13 or to incorrectly determined exhaust mass flow value Vₑₓₕ. If the comparisons at step S4' show that such is not the case, steps S1'-S4' are repeated at a later time.

Computer programme code for implementing a method according to the invention is with advantage included in a computer programme which can be read into the internal memory of a computer, e.g. the internal memory of an electronic control unit of a motor vehicle. Such a computer programme is with advantage provided via a computer programme product comprising a data storage medium which can be read by an electronic control unit and which has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

Fig. 2 illustrates very schematically an electronic control unit 40 comprising an execution means 41, e.g. a central processor unit (CPU), for execution of computer software. The execution means 41 communicates with a memory 42, e.g. of the RAM type, via a data bus 43. The control unit 40 comprises also a data storage medium 44, e.g. in the form of a flash memory or a memory of the ROM, PROM, EPROM or EEPROM type. The execution means 41 communicates with the data storage medium 44 via the data bus 43. A computer programme comprising computer programme code for implementing a method according to the invention, e.g. in accordance with either of the embodiments illustrated in Figs. 3 and 4, is stored on the data storage medium 44.

The invention is of course in no way restricted to the embodiments described above, since many possibilities for modifications thereof are likely to be obvious to one skilled in the art without therein having to deviate from the invention's basic concept such as defined in the attached claims.

## Claims

1. A method for fault detection in an exhaust system (3) which comprises
- an exhaust line (4) intended to receive exhaust gases from a combustion engine (1),
- a fuel oxidation device (5) situated in the exhaust line,
- a fuel injection device (20) for injection of fuel into the exhaust line (4) at an injection point (8) situated upstream of the fuel oxidation device (5), which injection device (20) is caused, to inject fuel into the exhaust gases with a mass flow so regulated that the fuel injected generates a desired temperature increase (ΔT) in the exhaust gases during their passage through the fuel oxidation device (5),
- an SCR catalyst (7) situated in the exhaust line, and
- a reducing agent injection device (30) for injection of reducing agent into the exhaust line (4) at an injection point (13) situated upstream of the SCR catalyst (7), which injection device (30) is caused to inject reducing agent into the exhaust gases with a mass flow so regulated that the reducing agent injected generates a NOₓ desired conversion (ΔNOₓ) in the exhaust gases during their passage through the SCR catalyst (7),
**characterised by**
- determining an exhaust mass flow value (Vₑₓₕ) which represents the mass flow of the exhaust gases released from the engine (1) to the exhaust line (4),
- comparing the mass flow of the fuel injected by the fuel injection device (20), herein called the actual fuel mass flow, with an expected fuel mass flow which corresponds to that which is expected, taking the exhaust mass flow value (Vₑₓₕ) into account, to be injected by the injection device (20) in order to generate the desired temperature increase (ΔT); or comparing the desired temperature increase generated (ΔT) with an expected temperature increase which corresponds to that which is expected, taking the exhaust mass flow value (Vₑₓₕ) into account, to be generated with the prevailing mass flow of the fuel injected by the injection device (20),
- comparing the mass flow of the reducing agent injected by the injection device (30), herein called the actual reducing agent mass flow, with an expected reducing agent mass flow which corresponds to that which is expected, taking the exhaust mass flow value (Vₑₓₕ) into account, to be injected by the injection device (30) in order to generate the desired NOₓ conversion (ΔNOₓ); or comparing the desired NOₓ conversion (ΔNOₓ) generated with an expected NOₓ conversion which corresponds to that which is expected, taking the exhaust mass flow value (Vₑₓₕ) into account, to be generated with the prevailing mass flow of the reducing agent injected by the injection device (30), and
- finding that there is in the exhaust system (3) an exhaust mass flow error due to exhaust leakage in the exhaust line upstream of the injection point (8) situated upstream of the fuel oxidation device (5) and upstream of the injection point (13) situated upstream of the SCR catalyst (7), or to incorrectly determined exhaust mass flow value (Vₑₓₕ) if said comparisons show that the following conditions are fulfilled:
a) if the actual fuel mass flow is smaller than the expected fuel mass flow, or the temperature increase generated (ΔT) is greater than the expected temperature increase, and
b) if the actual reducing agent mass flow is smaller than the expected reducing agent mass flow, or the NOₓ conversion generated (ΔNOₓ) is greater than the expected NOₓ conversion.

2. A method according to claim 1, **characterised in that** there is found to be in the exhaust system (3) an exhaust mass flow error due to exhaust leakage in the exhaust line (4) upstream of said injection points (8, 13) or to incorrectly determined exhaust mass flow value (Vₑₓₕ) if said comparisons show that the actual fuel mass flow is smaller than the expected fuel mass flow and that the actual reducing agent mass flow is smaller than the expected reducing agent mass flow.

3. A method according to claim 1, **characterised in that** there is found to be in the exhaust system (3) an exhaust mass flow error due to exhaust leakage in the exhaust line (4) upstream of said injection points (8, 13) or to incorrectly determined exhaust mass flow value (Vₑₓₕ) if said comparisons show that the temperature increase generated (ΔT) is greater than the expected temperature increase and that the NOₓ conversion generated (ΔNOₓ) is greater than the expected NOₓ conversion.

4. A computer programme comprising computer programme code for causing a computer to implement a method according to any one of claims 1-3 when the computer programme code is executed in the computer.

5. A computer programme product comprising a data storage medium which can be read by a computer and on which the programme code of a computer programme according to claim 4 is stored.

6. An electronic control unit of a motor vehicle comprising an execution means (41), a memory (42) connected to the execution means and a data storage medium (44) which is connected to the execution means and on which the computer programme code of a computer programme according to claim 4 is stored.

## Patentansprüche

1. Verfahren zur Fehlererkennung in einer Abgasanlage (3), welche umfasst
- eine Abgasleitung (4), die zum Erhalten von Abgasen von einem Verbrennungsmotor (1) ausgebildet ist,
- eine Kraftstoff-Oxidations-Vorrichtung (5), die in der Abgasleitung angeordnet ist,
- eine Kraftstoff-Einspritzvorrichtung (20) zum Einspritzen von Kraftstoff in die Abgasleitung (4) an einem Einspritzpunkt (8), welcher vor der Kraftstoff-Oxidations-Vorrichtung (5) angeordnet ist, wobei die Einspritzvorrichtung (20) dazu veranlasst wird, Kraftstoff in das Abgas mit einem Massenstrom einzuspritzen, der derart geregelt ist, dass der eingespritzte Kraftstoff einen gewünschten Temperaturanstieg (ΔT) in dem Abgas während seines Durchflusses durch die Kraftstoff-Oxidations-Vorrichtung (5) erzeugt,
- einen SCR-Katalysator (7), der in der Abgasleitung angeordnet ist, und
- eine Reduktionmittel-Einspritzvorrichtung (30) zum Einspritzen eines Reduktionsmittels in die Abgasleitung (4) an einem Einspritzpunkt (13), welcher vor dem SCR-Katalysator (7) angeordnet ist, wobei die Einspritzvorrichtung (30) dazu veranlasst wird, Reduktionsmittel in das Abgas mit einem Massenstrom einzuspritzen, der derart geregelt ist, dass das eingespritzte Reduktionsmittel eine gewünschte NOₓ Umwandlung (ΔNOₓ) in dem Abgas während seines Durchflusses durch den SCR-Katalysator (7) erzeugt,
**gekennzeichnet durch**
- Ermitteln eines Abgasmassenstromwerts (Vₑₓₕ), welcher den Massenstrom des Abgases wiedergibt, der von dem Motor (1) in die Abgasleitung (4) ausgestoßen wird,
- Vergleichen des Massenstroms des eingespritzten Kraftstoffs **durch** die Kraftstoff-Einspritzvorrichtung (20), hier aktueller Massenstromfluss genannt, mit einem erwarteten Massenstromfluss, welcher dem entspricht, der bei Berücksichtigung des Abgasmassenstroms (Vₑₓₕ) beim Einspritzen **durch** die Einspritzvorrichtung (20) erwartet wird, um den gewünschten Temperaturanstieg (ΔT) zu erzeugen; oder Vergleichen des gewünschten erzeugten Temperaturanstiegs (ΔT) mit einem erwarteten Temperaturanstieg, welcher dem entspricht, der bei Berücksichtigung des Abgasmassenstromwerts (Vₑₓₕ) der mit dem vorherrschenden Massenstrom des eingespritzten Kraftstoffs **durch** die Einspritzvorrichtung (20) erzeugt und erwartet wird,
- Vergleichen des Massenstroms des eingespritzten Reduktionsmittels **durch** die Einspritzvorrichtung (30), hier aktueller Reduktionsmittel-Massenstrom genannt, mit einem erwarteten Reduktionsmittel-Massenstrom, welcher dem entspricht, der bei Berücksichtigung des Abgasmassenstromwerts (Vₑₓₕ) beim Einspritzen **durch** die Einspritzvorrichtung (30) erwartet wird, um die gewünschte NOₓ Umwandlung (ΔNOx) zu erzeugen; oder Vergleichen der gewünschten erzeugten NOₓ Umwandlung (ΔNOx) mit einer erwarteten NOₓ Umwandlung, welche der entspricht, die bei Berücksichtigung des Abgasmassenstromwerts (Vₑₓₕ) die mit dem vorherrschenden Massenstrom des eingespritzten Reduktionsmittels **durch** die Einspritzvorrichtung (30) erzeugt und erwartet wird, und
- Feststellen, dass in dem Abgassystem (3) ein Abgasmassenstromfehler aufgrund eines Abgaslecks in der Abgasleitung auftritt, welcher vor dem Einspritzpunkt (8) angeordnet ist, welcher vor der Kraftstoff-Oxidations-Vorrichtung (5) und vor dem Einspritzpunkt (13) angeordnet ist, welcher vor dem SCR-Katalysator (7) angeordnet ist, oder eines inkorrekt ermittelten Abgasmassenstromwerts (Vₑₓₕ), wenn die Vergleiche zeigen, dass die folgenden Bedingungen erfüllt sind:
a) wenn der aktuelle Kraftstoffmassenstrom kleiner ist als der erwartete Kraftstoffmassenstrom, oder der erzeugte Temperaturanstieg (ΔT) größer ist als der erwartete Temperaturanstieg, und
b) wenn der aktuelle Reduktionsmittelmassenstrom kleiner als der erwartete Reduktionsmittelmassenstrom ist, oder die erzeugte NOₓ Umwandlung (ΔNOₓ) größer als die erwartete NOₓ Umwandlung ist.

2. Verfahren nach Anspruch 1, **dadurch gekennzeichnet, dass** in dem Abgassystem (3) ein Abgasmassenstromfehler aufgrund eines Abgaslecks in der Abgasleitung (4) festgestellt wird, welcher vor den Einspritzpunkten (8, 13) angeordnet ist oder eines inkorrekt ermittelten Abgasmassenstromwerts (Vₑₓₕ), wenn die Vergleiche zeigen, dass der aktuelle Kraftstoffmassenstrom kleiner ist als der erwartete Kraftstoffmassenstrom und dass der aktuelle Reduktionsmittelmassenstrom kleiner ist als der erwartete Reduktionsmittelmassenstrom.

3. Verfahren nach Anspruch 1, **dadurch gekennzeichnet, dass** in dem Abgassystem (3) ein Abgasmassenstromfehler aufgrund eines Abgaslecks in der Abgasleitung (4) festgestellt wird, welcher vor den Einspritzpunkten (8, 13) angeordnet ist, oder eines inkorrekt ermittelten Abgasmassenstromwerts (Vₑₓₕ), wenn die Vergleiche zeigen, dass der erzeugte Temperaturanstieg (ΔT) größer als der erwartete Temperaturanstieg ist und dass die erzeugte NOₓ Umwandlung (ΔNOₓ) größer ist als die erwartete NOₓ Umwandlung.

4. Computerprogramm, umfassend einen Computerprogrammcode, um einen Computer dazu zu veranlassen, ein Verfahren nach jedem der Ansprüche 1 bis 3 auszuführen, wenn der Computerprogrammcode in dem Computer ausgeführt wird.

5. Computerprogrammprodukt, umfassend ein Datenspeichermedium, welches von einem Computer gelesen werden kann und auf welchem der Programmcode eines Computerprogramms nach Anspruch 4 gespeichert ist.

6. Elektronische Steuereinheit eines Kraftfahrzeugs umfassend eine Ausführungseinrichtung (41), einen Speicher (42), welcher mit der Ausführungseinrichtung verbunden ist und ein Datenspeichermedium (44), welches mit der Ausführungseinrichtung verbunden ist und auf welchem der Computerprogrammcode eines Computerprogramms nach Anspruch 4 gespeichert ist.

## Revendications

1. Procédé de détection de défaut dans un système d'échappement (3) qui comprend :
- une conduite d'échappement (4) destinée à recevoir des gaz d'échappement d'un moteur à combustion (1),
- un dispositif d'oxydation de carburant (5) situé dans la conduite d'échappement,
- un dispositif d'injection de carburant (20) pour l'injection de carburant dans la conduite d'échappement (4) au niveau d'un point d'injection (8) situé en amont du dispositif d'oxydation de carburant (5), lequel dispositif d'injection (20) est amené à injecter du carburant dans les gaz d'échappement selon un débit massique régulé de telle sorte que le carburant injecté génère une augmentation de température souhaitée (ΔT) dans les gaz d'échappement pendant leur passage à travers le dispositif d'oxydation de carburant (5),
- un catalyseur SCR (7) situé dans la conduite d'échappement, et
- un dispositif d'injection d'agent de réduction (30) pour l'injection d'un agent de réduction dans la conduite d'échappement (4) au niveau d'un point d'injection (13) situé en amont du catalyseur SCR (7), lequel dispositif d'injection (30) est amené à injecter un agent de réduction dans les gaz d'échappement selon un débit massique régulé de telle sorte que l'agent de réduction injecté génère une conversion souhaitée de NOₓ (ΔNOₓ) dans les gaz d'échappement pendant leur passage à travers le catalyseur SCR (7), **caractérisé par**
- la détermination d'une valeur de débit massique d'échappement (Vₑₓₕ) qui représente le débit massique des gaz d'échappement libéré par le moteur (1) vers la conduite d'échappement (4),
- la comparaison du débit massique du carburant injecté par le dispositif d'injection de carburant (20), appelé ici débit massique réel de carburant, à un débit massique attendu de carburant, qui correspond à celui auquel on s'attend, compte tenu de la valeur de débit massique d'échappement (Vₑₓₕ), à voir injecter par le dispositif d'injection (20) afin de générer l'augmentation de température souhaitée (ΔT) ; ou la comparaison de l'augmentation de température souhaitée générée (ΔT) à une augmentation de température attendue qui correspond à celle à laquelle on s'attend, compte tenu de la valeur de débit massique d'échappement (Vₑₓₕ), à voir générer avec le débit massique en cours du carburant injecté par le dispositif d'injection (20),
- la comparaison du débit massique de l'agent de réduction injecté par le dispositif d'injection (30), appelé ici débit massique réel d'agent de réduction, à un débit massique attendu d'agent de réduction qui correspond à celui auquel on s'attend, compte tenu de la valeur de débit massique d'échappement (Vₑₓₕ), à voir injecter par le dispositif d'injection (30) afin de générer la conversion souhaitée de NOₓ (ΔNOₓ) ; ou la comparaison de la conversion souhaitée de NOₓ (ΔNOₓ) générée à une conversion de NOₓ attendu qui correspond à celle à laquelle on s'attend, compte tenu de la valeur de débit massique d'échappement (Vₑₓₕ), à voir générer avec le débit massique en cours de l'agent de réduction injecté par le dispositif d'injection (30), et
- la détermination du fait qu'il existe dans le système d'échappement (3) une erreur de débit massique d'échappement due à une fuite d'échappement dans la conduite d'échappement en amont du point d'injection (8) situé en amont du dispositif d'oxydation de carburant (5) et en amont du point d'injection (13) situé en amont du catalyseur SCR (7), ou à une valeur de débit massique d'échappement (Vₑₓₕ) incorrectement déterminée si lesdites comparaisons montrent que les conditions suivantes sont remplies :
a) si le débit massique réel de carburant est inférieur au débit massique attendu de carburant, ou si l'augmentation de température générée (ΔT) est supérieure à l'augmentation de température attendue, et
b) si le débit massique réel d'agent de réduction est inférieur au débit massique attendu d'agent de réduction, ou si la conversion de NOₓ générée (ΔNOₓ) est supérieure à la conversion de NOₓ attendue.

2. Procédé selon la revendication 1, **caractérisé en ce qu'**il est déterminé qu'il existe dans le système d'échappement (3) une erreur de débit massique d'échappement due à une fuite d'échappement dans la conduite d'échappement (4) en amont desdits points d'injection (8, 13) ou à une valeur de débit massique d'échappement (Vₑₓₕ) incorrectement déterminée si lesdites comparaisons montrent que le débit massique réel de carburant est inférieur au débit massique attendu de carburant et que le débit massique réel d'agent de réduction est inférieur au débit massique attendu d'agent de réduction.

3. Procédé selon la revendication 1, **caractérisé en ce qu'**il est déterminé qu'il existe dans le système d'échappement (3) une erreur de débit massique d'échappement due à une fuite d'échappement dans la conduite d'échappement (4) en amont desdits points d'injection (8, 13) ou à une valeur de débit massique d'échappement (Vₑₓₕ) incorrectement déterminée si lesdites comparaisons montrent que l'augmentation de température générée (ΔT) est supérieure à l'augmentation de température attendue et que la conversion de NOₓ générée (ΔNOₓ) est supérieure à la conversion de NOₓ attendue.

4. Programme informatique comprenant un code de programme informatique destiné à amener un ordinateur à mettre en oeuvre un procédé selon l'une quelconque des revendications 1 à 3 lorsque le code de programme informatique est exécuté sur l'ordinateur.

5. Produit de programme informatique comprenant un support de stockage de données qui peut être lu par un ordinateur et sur lequel est stocké le code de programme d'un programme informatique selon la revendication 4.

6. Unité de commande électronique d'un véhicule à moteur comprenant des moyens d'exécution (41), une mémoire (42) connectée aux moyens d'exécution et un support de stockage de données (44) qui est connecté aux moyens d'exécution et sur lequel est stocké le code de programme informatique d'un programme informatique selon la revendication 4.
